# EUROPEAN PATENT APPLICATION

(11) **EP 2 772 773 A1**
(43) Date of publication of application: **03.09.2014**
(21) Application number: 14156824.6
(22) Date of filing: 26.02.2014
(51) Int. Cl.: G01S 13/26, F42C 13/04

(54) **Radar proximity fuse and processing method of an echo radar signal for the acquisition of distance information between a target and a Doppler radar**

(30) Priority: 28.02.2013 IT RM20130120
(71) Applicant: MBDA ITALIA S.p.A., 00131 Roma (IT)
(72) Inventor: Conti, Carlo, I-00131 Roma (IT); Petrullo, Fausto, I-00131 Roma (IT); Guerrera, Massimo, I-00131 Roma (IT); Izzi, Andrea, I-00131 Roma (IT); Carradori, Riccardo, I-00131 Roma (IT)
(74) Representative: Carangelo, Pierluigi

(57) **Abstract**

Radar proximity fuse (1) adapted to receive an echo radar signal (s_rx) produced by the reflection on a target (T) of a transmitted radar signal (s_tx), the transmitted signal (s_tx) comprising a sequence of M impulses coded with a phase code (p_cd).

The radar proximity fuse (1) comprising:
- a radiofrequency analog receiving front end (15) for receiving the echo radar signal (s_rx), adapted to provide in output a baseband signal starting from the echo radar signal (s_rx) received;
- an analog to digital converter (12) positioned at the output of the analog receiving front end (15) adapted to sample the baseband signal to obtain in output a sequence of digital samples (d_rx);
- a digital processing block (20) comprising a plurality of digital processing channels (C1, C2, ...CN) each associated to a respective range gate and each adapted to receive in input said sequence of digital samples (d_rx).

## Description

The present description refers to the technical field of Doppler radar systems and relates in particular to a processing method of an echo radar signal for the acquisition of distance information between a target and a Doppler radar.

Radar proximity fuses have been known of in the prior art for a long time, for example of the type used on board a missile, used to estimate the distance between the missile and a target so as to trigger the detonation of a warhead transported by a missile once it has been found that the distance between the missile and a target is less than a predetermined distance.

One example of a radar proximity fuse belonging to the prior art is disclosed in US patent 4,297,702. Said proximity fuse comprises a transmission chain of a radar signal with phase-coded pulses and a chain for receiving and processing the echo radar signal. The chain for receiving and processing the echo radar signal, comparing the echo radar signal with a plurality of delayed replicas of the transmitted signal, makes it possible to perform an observation over a plurality of range gates thanks to the provision of a plurality of parallel analog processing paths of the echo radar signal received. In the aforementioned US patent the possibility of observing the echo radar signal with respect to a plurality of range gates is achieved at the high price of introducing a structural complication due to the analog components provided for on the parallel analog processing paths of the signal.

Another example of a radar proximity fuse belonging to the prior art is disclosed in US patent application published at No. 2001/0024170 A1. Said radar proximity fuse is relatively complex from the hardware point of view since down-conversion and I&Q sampling and processing of both the transmitted and the return radiofrequency signals is required. The object of the present disclosure is therefore to make available a radar proximity fuse which makes it possible to overcome the drawbacks mentioned above with reference to the prior art.

Such object is achieved by a radar proximity fuse as defined in general in claim 1. Preferred or advantageous embodiments of the aforesaid proximity fuse are defined in the appended dependent claims.

The present invention also relates to a processing method of an echo radar signal for the acquisition of distance information between a target and a Doppler radar.

The invention will be better understood from the detailed description given below, by way of a non-limiting example, of a specific embodiment, with reference to the appended drawings, wherein:
- figure 1 shows a functional block diagram of a radar proximity fuse comprising a digital signal processor;
- figure 2 shows a functional block diagram of the digital signal processor in figure 1, comprising a plurality of delay blocks and a plurality of extraction blocks of distance information between the proximity fuse and a target; and
- figure 3 shows a functional diagram of an extraction block of distance information between the proximity fuse and the target.

In the drawings, elements which are the same or similar will be indicated using the same reference numerals.

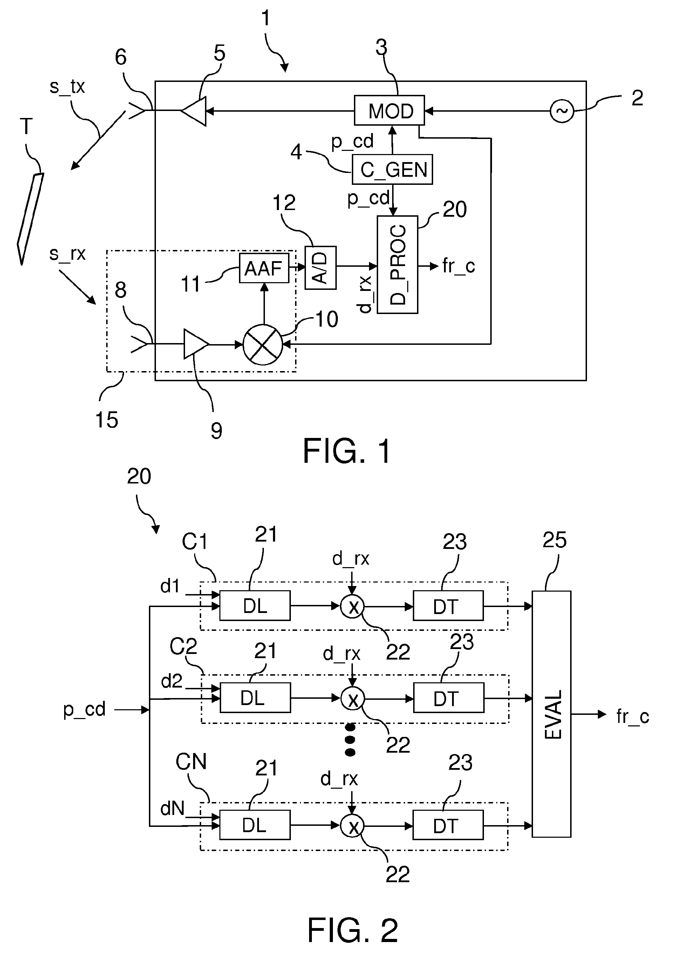

Figure 1 schematically shows a non-limiting embodiment of a proximity fuse 1 of the Doppler radar type. According to a preferred embodiment, the aforesaid proximity fuse 1 is a CW (Continuous Wave) Doppler radar proximity fuse in CW.

The radar proximity fuse 1 is for example destined to be used on board a missile or rocket or weapon so as to trigger the detonation of an explosive warhead provided on board said missile or rocket or weapon. To such purpose, the proximity fuse 1 may be operatively connected to a detonator (not shown in the drawings).

The proximity fuse 1 comprises a local oscillator 2 adapted to produce in output a radio frequency carrier signal, for example in Ku band, and a modulator 3 "MOD" adapted to modulate the radio frequency carrier signal with a phase code p_cd. The phase code p_cd is configured to provide a response with a peak when compared with a phase replica of itself and to supply a low amplitude response in other circumstances. The phase code is provided in output by a phase code generator 4 "GEN" operatively connected to the modulator 3. For example, the phase code generator 4 comprises a memory or register adapted to memorise said phase code p_cd, as symbols of the code or as digital samples of said symbols.

For example, without thereby introducing any limitation, the phase code p_cd is a binary phase code. According to one embodiment, the aforesaid phase code p_cd is a pseudo random binary code such that at the output of the modulator 3 a signal is produced in the form of a sequence of M pulses. Such pulses, depending on the symbols of the phase code p_cd have, in an appropriate phase reference system, a 0° phase (for example in correspondence with a symbol equal to "0") or a 180° phase (for example in correspondence with a symbol equal to "1"). M represents an integer, which also corresponds to the length of the phase code p_cd, preferably greater than one and generally amounting about to several tens or being of the hundred order.

According to an advantageous embodiment, the aforesaid phase code p_cd is adapted to be reconfigured dynamically, in this way it is possible to choose and/or vary the phase code as needed depending on the disturbance or to avoid real time recognition by third parties of said code and its reproduction aimed to circumventing the proximity fuse 1. To vary the phase code p_cd it is for example possible to control the generation block 4 before or even during the mission.

The proximity fuse 1 preferably comprises a signal amplifier 5 and a transmitter aerial 6 for the remote radio transmission of the radar signal produced in output by the modulator 3. The transmitter aerial 6 is for example a system of aerials comprising at least one pair of aerials.

The radio signal in output from the transmitter aerial 6 represents the incident radar signal s_tx. Said incident radar signal s_tx, or transmitted radar signal, presents itself in the form of a sequence of phase-coded pulses. In the case in which such incident radar signal s_tx strikes a target T, a reflected signal is produced which represents an echo radar signal s_rx. As is known, the echo radar signal includes a useful signal component, that is to say the signal reflected by the target T and thus essentially assimilable to a sequence of phase-coded pulses M, and a noise signal component, essentially represented by unwanted reflections on the ground, on water, on the vegetation or on infrastructures.

The digital fuse 1 comprises a radio frequency analog receiving front end 15 for receiving the echo radar signal s_rx, adapted to provide in output a baseband signal starting from the echo radar signal s_rx received, by means of processing in the analog domain.

The radio frequency analog receiving front end 15 comprises a receiving aerial 8 for receiving the echo radar signal s_rx and preferably a low noise amplifier 9. The receiving aerial 8 is for example a system of aerials comprising at least one pair of aerials. It will be clear to a person skilled in the art that the same aerial 6 or system of aerials used in transmission may be used for receiving the echo radar signal s_rx, for example by means of a circulator.

According to a particularly advantageous embodiment, the radio frequency analog receiving front end 15 is a single channel and single-output front-end. In other words, from the receiving aerial 8 to the output of the radio frequency analog receiving front end 15 only one analog processing channel is provided.

The radio frequency analog receiving front end 15 comprises a baseband conversion block 10, for example consisting of or comprising a mixer 10 adapted to receive in input the radio frequency signal produced in output by the modulator 3, and the echo radar signal s_rx as caught by the aerial 8 and possibly amplified by means of the low noise amplifier 9. The baseband signal in output from the baseband conversion block 10 has, for example a bandwidth of the useful signal to the order of hundreds of MHz.

According to one embodiment, the radio frequency analog receiving front end 15 further comprises an anti-aliasing analog filter 11 "AAF" having the function of cutting out the components of the baseband signal outside the useful signal band and that of cutting out the unwanted products of intermodulation observable in output from the mixer 10. The aforesaid analog anti-aliasing filter 11 is a low pass filter or more preferably a band pass filter adapted to eliminate a possible continuous component of the baseband signal. For example, the aforesaid band pass filter has a low cut-off frequency of the order of tens of KHz. Such continuous component would in fact represent a direct return of the transmitted signal s_tx in the radio frequency analog receiving front end 15 and would have pulses having substantially, instant by instant, the same phase as the pulses of the signal in input to the mixer 10 as provided in output by the modulator 3.

The radar proximity fuse 1 further comprises:
- an analog to digital converter 12 "A/D" adapted to convert the analog signal produced in output by the radio frequency analog receiving front end 15 into a sequence of digital samples d_rx;
- a digital processing block 20 "D_PROC" adapted to process the sequence of digital samples d_rx for example to produce in output a command signal of the detonation fr_c.

According to a preferred embodiment, the analog to digital converter 12 is such as to provide in output a number J of samples for each pulse of the echo radar signal s_rx. J is preferably an integer greater than one and in a non-limiting manner comprised between 2 and 10, extremes included.

Preferably, the analog to digital converter 12 is a multi-bit analog to digital converter, for example a 12-bit analog to digital converter.

According to a non-limiting example, the sampling frequency of the analog to digital converter is about 250 MHz.

According to a particularly advantageous embodiment, in which the radio frequency analog receiving front end 15 is a single channel and single-output front-end, the analog to digital converter 12 is adapted to only sample amplitudes of the baseband analog signal produced in output by the radio frequency analog receiving front end 15 for providing as output digital samples representative of said amplitudes. This means that separate analog to digital converters, for example two separate analog to digital converters, for sampling the in-phase and quadrature components of the baseband analog signal (and therefore two separate outputs of in the radio frequency analog receiving front end 15) are not provided, but only amplitude sampling is performed. As shown in figure 1, the digital processing block 20 is such as to also receive in input the phase code p_cd, produced in output by the code generator 4 and used in the phase coding of the radar signal in transmission. According to a preferred embodiment, like the one shown in figures 1 and 2, the digital processing block 20 is adapted to directly receive in input the phase code p_cd produced in output by the code generator 4, for example because there is a direct digital connection between the code generator 4 and the processing block 20. Non limiting examples of a direct digital connection are: direct reading by the processor from a memory of the code generator 4 in which the phase code is stored or connection with a digital bus provided between the code generator and the digital processor. With reference to figure 2, the digital processing block 20 comprises a plurality of digital processing channels C1,C2,..., CN, wherein N is an integer greater than 1, each associated with a respective observation distance (range gate). Each of the digital processing channels C1,C2,..., CN, comprises a digital delay block 21 "DL" adapted to produce delayed replicas of the phase code p_cd, wherein a time delay d1, d2.., dN is associated with each delayed replica which depending on the Doppler radar equation corresponds to a given range gate between the target T and the digital fuse 1. For example, the aforesaid digital delay blocks 21 are digital delay lines, or delay registers or are fully implemented via software by means of appropriate management of a memory area.

According to one embodiment, the delays d1,d2,...,dN associated with the various digital delay blocks 21 are adjustable parameters which can be dynamically reconfigured over time, for example even during operation of the radar proximity fuse 1, that is to say before or during the mission. Such ability to reconfigure the delays d1,d2,...,dN advantageously makes it possible to implement one or more of the following advanced functions even in the presence of hostile environments: contemporarily following several targets, identifying and isolating the clutter contribution, performing an altimeter function.

In output from each digital delay block 21 each digital processing channel C1, C2,..., CN comprises a digital multiplier 22 adapted to multiply, sample by sample, the delayed replicas of the phase code with the sequence of digital samples d_rx produced in output by the digital analog converter 12 so as to produce in output sequences of phase decoded digital samples. Such operation is used to cancel the phase code from the sequence of digital samples. It is to be noted that such cancellation effectively takes place in the case in which one of the delayed replicas has the associated delay d1,d2,...,dN which corresponds substantially to the overall flight time of the radar signal which is equal to the sum of the propagation time of the radar signal transmitted s_tx between the transmitter aerial 6 and the target T with the propagation time of the echo radar signal s_rx between the target T and the receiver aerial 8. It is to be noted that in the case in which the analog to digital converter 12 is such as to produce in output for each pulse of the echo radar signal s_rx a number J of samples greater than 1, the samples of the delayed replicas of the phase code in input to the digital multipliers 22 are maintained J times for each phase code symbol p_cd so that the J samples of a same pulse are multiplied by a same phase code symbol.

In output from each digital multiplier 22 each digital processing channel C1, C2,..., CN comprises a respective digital information extraction block 23 "DT" responsible for extracting information correlated to the distance of the target T in relation to the digital fuse 1. Such information extraction is performed by processing the sequence of phase decoded digital samples as obtained at the output of the digital multipliers 22.

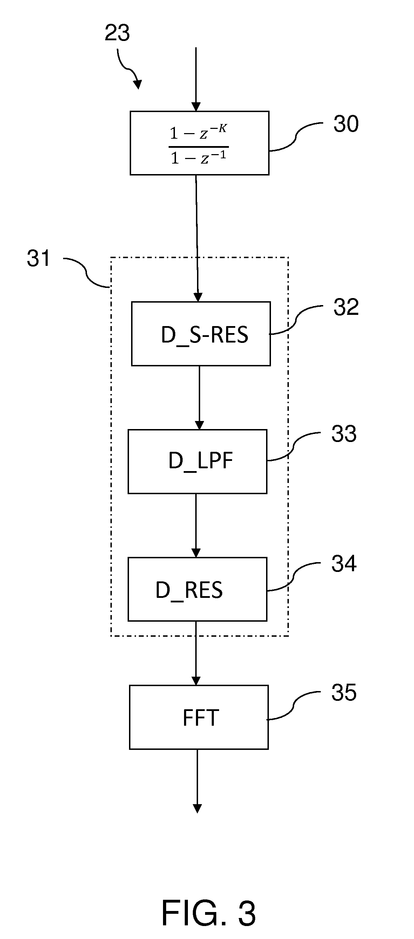

With reference to figure 3, according to one embodiment, each of the information extraction blocks 23 comprises a sum block 30 configured to supply in output a sequence of samples in which each sample is obtained, by means of a digital calculation operation of a moving sum or of a moving media, from a number K of samples of the respective sequence of phase decoded digital samples, in which K is an integer which represents the number of samples acquired by the analog to digital converter 12 for each sequence of M pulses of the echo radar signal s_rx and is for example of the order of some hundreds. In other words K = J x M.

A register of K elements managed on a LIFO (Last-In-First-Out) basis is for example provided to perform the moving sum of K samples. The addition of a new sample takes place at an end position of the register making the samples already memorised move along by one position and determining the cancellation of the sample memorised at the opposite end, operation expressed in the domain of the Z-transform as a multiplication by (1-z^{-K}), to then sum the K elements of the register, operation expressed in the domain of the Z-transform as a division by (1-z⁻¹). In other words, in the domain of the Z-transform the sum block 30 is configured as a cascade (that is to say a multiplication in the domain of the Z-transform) between a perfect integrator and a mobile observation window having a length equal to K samples.

According to one embodiment, each of the information extraction blocks 23 comprises a band reduction digital block 31 at the output of the sum block 30. For example, the band reduction digital block 27 comprises a sum and re-sampling block 32 "D_S-RES" configured to obtain, by means of a calculation operation of a sum or of an average, a sample in output starting from each disjoint group of J* consecutive samples of the respective sequence of digital samples obtained in output from the sum block 30. The number J* is an integer which represents the band reduction factor and is preferably a number much smaller than K and more preferably equal to the number J of samples acquired in reception (by means of the analog to digital converter 12 - figure 1) for each pulse of the echo radar signal s_rx. It is to be noted that in the case in which J*=J a sample in output for each pulse of the echo radar signal s_rx is obtained in output from the sum and re-sampling block 32.

In practice, the sum and re-sampling block 32 is responsible for performing a band reduction by a factor J*, merging the information relative to groups of J* consecutive samples, de facto performing a re-sampling on the basis of a first re-sampling frequency.

This way it is possible to obtain a reduction of the computational load. For example, the signal in output from the sum and re-sampling block 32 has a frequency, or rather a re-sampling frequency, of the order of tens of MHz.

According to one embodiment, the band reduction block 27 comprises format the output of the sum and re-sampling block 32 a digital low pas filter 33 "D_LPF", preferably a filter of the FIR type having a pass band equal to the range of Doppler frequencies of interest.

According to one embodiment, the band reduction block 27 comprises at the output of the digital low pass filter 33 a re-sampling block 34 "D_RES2", adapted to perform a re-sampling of the signal in output from the digital low pass filter 33 with a second re-sampling frequency lower than the first re-sampling frequency of the sum and re-sampling block 32, to take into consideration the band restriction performed by the digital low pass filter 33. For example, the second re-sampling frequency is of the order of a MHz.

According to one embodiment, each of the information extraction blocks 23 comprises at the output of the sum block 30 or at the output of the band reduction block 31 (if provided) a digital calculation block 33 "FTT" of a Fourier transform of the FFT type (Fast Fourier Transform) adapted to obtain for each Doppler frequency of interest a respective amplitude value and a respective phase value.

With reference to figure 2, the digital processing block 20 comprises a distance evaluation block 25 "EVAL" adapted to receive in input the amplitude and phase values calculated for each Doppler frequency of interest by the calculation blocks FFT 35 of the various processing channels C1, C2,..., CN which thus represent the information correlated to the fuse-target distance extracted by the digital blocks 23. The evaluation block 25 is configured to compare the aforementioned amplitudes with one or more predefined thresholds so as to establish the possible presence of a target at or near the range gates associated with the processing channels C1, C2,.., CN and to a given Doppler frequency analysed. If the presence of a target T at a given range gate is established, the evaluation block 25 is for example such as to send in output a detonation signal f_rc, for example to a detonator, to cause the explosion of the head.

It is to be noted that the above detailed description made for the digital fuse 1 corresponds to the description of the processing method of an echo radar signal for the acquisition of distance information between a target and a Doppler radar, comprising the steps of:
- receiving an echo radar signal s_rx produced by the reflection on a target T of a transmitted radar signal s_tx, the transmitted radar signal s_tx comprising pulses coded with a phase code p_cd:
   - performing an analog processing of the echo radar signal s_rx received to produce in output a baseband signal;
   - sampling the analog baseband signal to obtain in output a sequence of digital samples d_rx;
   - performing parallel digital processing on several channels of the sequence of digital samples d_rx, each channel being associated to a respective range gate.

It is to be noted that the aforesaid method, as well as being utilisable in a radar proximity fuse may be used in other applications in which there is a need to estimate the distance between reciprocally mobile entities, for example in the abstract also in anti-collision radar for vehicles, or in vehicle speed detectors, for example land transport vehicles. It may in addition be noted that the aforesaid method can in general be implemented in proximity or distance sensors or in movement parameter sensors, such as speed sensors.

In the aforesaid method the step of performing the aforesaid digital processing on several channels comprises for each channel the steps of:
- producing a replica of the phase code p_cd delayed by a time delay corresponding to a respective range gate between the fuse 1 and the target T;
- multiplying said sequence of digital samples with digital samples of the delayed replica to produce in output a sequence of phase decoded digital samples;
- processing said decoded sequence of digital samples to extract information correlated to the distance of the target T in relation to the digital radar fuse 1.

Further features of the aforesaid method may be directly deduced from the detailed description made above for the radar proximity fuse 1 and will therefore not be repeated.

From the description made above it may be seen how a proximity radar fuse and a processing method of the type described above fully achieve the intended objects. In fact, by performing digital processing on several channels immediately downstream of the analog receiving front end 15, the above described radar proximity fuse described above makes it possible to perform an observation over a plurality of distances and/or a plurality of targets without limit within the range of the functioning distance of the Doppler radar and without requiring the presence of dedicated analog components replicated for each channel. This way, the radar proximity fuse described above represents a streamlined solution from the point of view of the complexity of the analog hardware components required, relatively lightweight and occupying relatively little space.

Advantageously, by having available data provided by parallel digital processing over several channels it is possible to implement advanced functions such as: contemporarily observing various targets at different distances; and/or using a channel to measure the height of flight from the ground, not necessarily to explode the warhead but to guide a missile at a predefined height from the ground; and/or dedicating one channel to the clutter echo ( e.g. in vertical mission towards the ground) which will probably contain a very high signal and dedicating other channels to the target or to the targets.

For the reasons already explained in the description above, the embodiments which provide for the possibility of dynamically reconfiguring the phase code and/or delays are, in addition, particularly advantageous.

Obviously, a person skilled in the art may make numerous modifications and variations to the radar proximity fuse and processing method described above so as to satisfy contingent and specific requirements, while remaining within the sphere of protection of the invention as defined by the following claims.

## Claims

1. Radar proximity fuse (1) adapted for receiving a radar echo signal (s_rx) produced by the reflection on a target (T) of a transmitted radar signal (s_tx), the transmitted signal (s_tx) comprising a sequence of M pulses coded with a phase code (p_cd), the radar proximity fuse (1) comprising:
- a phase code generator (4) adapted to provide said phase code (p_cd);
- a radiofrequency analog receiving front end (15) for receiving the radar echo signal (s_rx), adapted to provide in output a baseband signal starting from the received radar echo signal (s_rx);
- an analog to digital converter (12) placed at the output of the analog receiving front end (15) adapted for sampling the baseband signal to obtain in output a sequence of digital samples (d_rx);
- a digital processing block (20) comprising a plurality of digital processing channels (C1, C2, ...CN) configured to operate in parallel and each associated to a respective observation distance and each adapted for receiving in input said sequence of digital samples (d_rx);
wherein each digital processing channel (C1, C2,...CN) comprises:
- a delay block (21) adapted for producing a replica of the phase code (p_cd) delayed with a respective time delay (d1, ..., dN) corresponding to a respective observation distance between the fuse (1) and the target (T);
- a digital multiplier (22) adapted for multiplying the sequence of digital samples with digital samples of said delayed replica to produce in output a phase decoded sequence of digital samples;
- a digital information extraction block (23) adapted for processing the phase decoded sequence of digital samples to extract information correlated to the distance between the target (T) and the digital fuse (1).

2. Radar proximity fuse (1) according to claim 1, wherein the phase code (p_cd) is dynamically programmable during the operation of said fuse (1).

3. Radar proximity fuse (1) according to claim 1 or 2, wherein said respective time delay (d1,...,dN) is dynamically programmable during the operation of said fuse (1).

4. Radar proximity fuse (1) according to any of the previous claims, wherein each digital processing channel (C1, ...CN) comprises an extraction block of distance information (23) comprising a sum block (30) configured to obtain in output a sequence of samples in which each sample is obtained, by means of a digital evaluation operation of a moving sum or a moving average, from a number K of samples of the respective phase decoded sequence of digital samples, in which K is an integer which represents the number of samples acquired by the analog to digital converter (12) for said sequence of M pulses of the radar echo signal (s_rx).

5. Radar proximity fuse (1) according to claim 4, in which in the Z transform domain the sum block (30) is configured as a cascade between a perfect integrator and a mobile observation window of length equal to K samples.

6. Radar proximity fuse (1) according to claim 5, wherein said distance information extraction block (23) comprises a band reduction digital block (31) at the output of the sum block (30).

7. Radar proximity fuse (1) according to claim 6, wherein the band reduction block (27) comprises a sum and re-sampling block (32) configured to obtain, by means of an evaluation operation of a sum or an average, an output sample starting from each disjoint group of J* consecutive samples of the sequence of digital samples obtained in output from the sum block (30), in which J* is an integer representing a band reduction factor.

8. Radar proximity fuse (1) according to claim 6 or 7, wherein the band reduction block (27) comprises at the output of the sum and re-sampling block (32) a low pass digital filter (33) and at the output of said low pass digital filter (33) a re-sampling block (34) to take into account of the band restriction performed by the low pass digital filter (33).

9. Radar proximity fuse (1) according to any of the previous claims, wherein said baseband signal has a bandwidth of the useful signal of the order of hundreds of MHz.

10. Radar proximity fuse (1) according to any of the previous claims, wherein said transmitted radar signal is a signal in the Ku band.

11. Radar proximity fuse (1) according to claim 1, wherein said digital processing block (20)is adapted to directly receive in input the phase code (p_cd) produced in output by the code generator (4).

12. Radar proximity fuse (1) according to claim 1, in which the radio frequency analog receiving front end (15) is a single channel and single-output front end, the analog to digital converter (12) is adapted to only sample amplitudes of the baseband analog signal produced in output by the radio frequency analog receiving front end (15) for providing as output digital samples representative of said amplitudes.

13. Radar proximity fuse (1) according to claim 1, wherein said analog to digital converter is a multi-bit converter.

14. Missile or rocket or weapon comprising a radar proximity fuse (1) according to any of the previous claims.

15. Processing method of a radar echo signal for the acquisition of distance information between a target (T) and a Doppler radar, comprising the steps of:
- receiving a radar echo signal (s_rx) produced by the reflection on a target (T) of a transmitted radar signal (s_tx), the transmitted radar signal (s_tx) comprising pulses coded with a phase code (p_cd) provided by a phase code generator (4):
- processing the radar echo signal (s_rx) in the analog domain to obtain a baseband analog signal;
- sampling the baseband analog signal to obtain in output a sequence of digital samples (d_rx);
- performing a parallel digital processing on several channels of said sequence of digital samples (d_rx), each channel being associated to a respective observation distance;
wherein said digital processing comprises for each channel the steps of:
- producing a replica of the phase code (p_cd) delayed by a respective time delay corresponding to a respective observation distance between said fuse (1) and said target (T);
- multiplying said sequence of digital samples with said delayed replica to produce in output a phase decoded sequence of digital samples;
- processing the phase decoded sequence of digital samples to extract information correlated to the distance between the target (T) and the digital fuse (1).
